# EUROPÄISCHE PATENTSCHRIFT

(11) **EP 1 354 010 B1**
(45) Veröffentlichungstag und Bekanntmachung des Hinweises auf die Patenterteilung: **15.06.2005**
(21) Anmeldenummer: 01978334.9
(22) Anmeldetag: 04.09.2001
(51) Int. Cl.: C09D 133/04, B05D 7/26

(54) **BINDEMITTELLÖSUNG UND IHRE VERWENDUNG FÜR DIE KFZ-KLEINSTREPARATUR IM TEIL**
BONDING MATERIAL SOLUTION AND THE USE THEREOF IN AN AUTOMOTIVE SPOT REPAIR KIT
SOLUTION DE LIANT ET UTILISATION POUR DE PETITS TRAVAUX DE CARROSSERIE

(30) Priorität: 06.09.2000 DE 10043810
(43) Veröffentlichungstag der Anmeldung: 22.10.2003
(73) Patentinhaber: BASF Coatings AG, 48165 Münster (DE)
(72) Erfinder: WITTE, Michael, 59387 Ascheberg (DE); BOOK, Jürgen, 48165 Münster (DE); MATIJEVIK, Mirjana, 48151 Münster (DE); KAUP, Nadja, 48165 Münster (DE)
(74) Vertreter: Fitzner, Uwe, Dr.
(86) Internationale Anmeldenummer: PCT/EP2001/010146
(87) Internationale Veröffentlichungsnummer: WO 2002/020680

(56) Entgegenhaltungen:
- DE-C- 936 468
- GB-A- 2 103 638

## Beschreibung

Die vorliegende Erfindung betrifft eine neue Bindemittellösung. Des weiteren betrifft die vorliegende Erfindung die Verwendung der neuen Bindemittellösung als Spot-Blender für die KFZ-Kleinstreparatur im Teil. Außerdem betrifft die vorliegende Erfindung ein neues Verfahren für die KFZ-Kleinstreparatur im Teil. Nicht zuletzt betrifft die vorliegende Erfindung eine neue Vorrichtung für das Training und die Durchführung neuer Verfahren für die KFZ-Kleinstreparatur im Teil (Spot-Repair-Set).

Bei großen Schadstellen an Kraftfahrzeugen werden üblicherweise die beschädigten Teile der Karosserie entnommen und vollflächig reparaturlackiert. Bei Kleinstschäden, die gerade bei neuen oder hochwertigen Fahrzeugen ein Ärgernis sind, wie Schlüsselkratzer oder Rempler der Parkplatzbegrenzung ist diese Verfahrensweise aber sehr aufwendig und der Größe des Schadens nicht angemessen.

Kleinstschäden werden daher vorzugsweise mit Hilfe von Verfahren zur KFZ-Kleinstreparatur im Teil behoben. Diese werden von der Fachwelt auch als Punktausbesserung oder Spot-Repair bezeichnet.

Die bekannten Spot-Repair-Verfahren weisen aber zahlreiche Nachteile auf und sind schwierig durchzuführen. So sind häufig die Auslaufzonen des Klarlack-Spritznebels auf der Originallackierung zu weit, was die optische Anpassung von Reparaturlackierung und Originallackierung erschwert. Außerdem kann wegen einer schlechten Haftung der Reparatur-Klarlackierung auf der Originallackierung in den Auslaufzonen um die Schadstelle die Reparatur-Klarlackierung wegbrechen oder ausreißen. Dadurch entstehen deutlich sichtbare Kanten, die die Reparatur-Klarlackierung, die über die Originallackierung hinausragt, sogar ganz umlaufen können. Die Reparaturlackierung wirkt dann wegen der optisch harten Übergangszonen insgesamt wie ein "aufgeklebtes Pflaster".

Man hat versucht, die Probleme des Wegbrechens oder Ausreißesn und der schwierigen Anpassung der optischen Eigenschaften in den Auslaufzonen dadurch zu lösen, daß man sogenannte Spot-Blender über die ungehärtete Reparatur-Klarlackierung appliziert. Hierdurch sollen besonders "weiche" Übergangszonen erzeugt werden und verhindert werden, daß die Reparatur-Klarlackierung in den Randzonen zur Originallackierung ausreißt. Indes weisen die bislang verwendeten Spot-Blender nicht die für den Spot-Repair notwendige Prozeßsicherheit auf, was unter Umständen aufwendige Nacharbeiten notwendig macht. Aufgrund dieser Nachteile, kommen die bekannten Spot-Blender auch nicht für eine Anwendung im Spot-Repair von KFZ-Originallackierungen in der Linie beim Automobilhersteller in Betracht.

Aufgabe der vorliegenden Erfindung ist es, eine neue Bindemittellösung zu bereitzustellen, die sich als Spot-Blender für die KFZ-Kleinstreparatur im Teil eignet, wobei der neue Spot-Blender nicht mehr die Nachteile des Standes der Technik aufweisen soll, sondern eine hohe Prozeßsicherheit, ein sehr gutes Auslaufen und eine sehr gute Aufnahme der Spritznebeltröpfchen in den Auslaufzonen gewährleisten soll, so daß besonders "weiche" Übergangszonen der Reparatur-Klarlackierung resultieren. Dabei sollen die Prozeßsicherheit und die optische und mechanische Qualität, die durch den neuen Spot- Blender hervorgerufen wird, so gut sein, daß sich die betreffenden neuen Spot-Repair-Verfahren auch für die Punktausbesserung von KFZ-Originallackierungen in der Linie beim Autohersteller eignen. Nicht zuletzt soll die neue Bindemittellösung toluolfrei sein und keiner Kennzeichnungspflicht unterliegen.

Außerdem war es die Aufgabe der vorliegenden Erfindung, ein neues Verfahren für die KFZ-Kleinstreparatur im Teil zu finden, das die Nachteile des Standes der Technik nicht mehr länger aufweist, sondern eine hohe Prozeßsicherheit hat und ein sehr gutes Auslaufen und eine sehr gute Aufnahme von Spritznebeltröpfchen in den Auslaufzonen gewährleisten soll. Außerdem sollen die mit Hilfe des neuen Verfahrens hergestellten Reparaturlackierungen besonders "weiche" Übergangszonen zur Originallackierung haben, sodaß sie sich von der Originallackierung optisch nicht abheben, sondern hieran völlig angepaßt sind.

Des weiteren war es die Aufgabe der vorliegenden Erfindung, ein neues Spot-Repair-Set bereitzustellen, die den Lackbetrieben zu Zwecken des Trainings und der Durchführung der bekanntermaßen aufwendigen und komplexen Spot-Repair-Verfahren an die Hand gegeben werden kann.

Demgemäß wurde die neue Bindemittellösung gefunden, die, bezogen auf die Lösung,
(A) 30 bis 50 Gew.-% mindestens eines Alkyl- und/oder Cycloalkylacetats mit 3 bis 10 Kohlenstoffatomen im Alkylrest und/oder im Cycloalkylrest,
(B) 30 bis 50 Gew.-% mindestens eines Alkoxyalkyl-, Cycloalkoxyalkyl-, Alkoxycycloalkyl- und/oder Cycloalkoxycycloalkylacetats mit 1 bis 6 Kohlenstoffatomen im Alkoxy- und Alkylrest und mit 3 bis 10 Kohlenstoffatomen im Cycloalkoxy- und Cycloalkylrest,
(C) 10 bis 30 Gew.-% mindestens eines Alkylaromaten mit mindestens zwei Alkylresten mit mindestens 1 bis 6 Kohlenstoffatomen im Molekül,
(D) 0,01 bis 1 Gew.-% mindestens eines Alkohols mit 1 bis 6 Kohlenstoffatomen im Molekül,
(E) 0,005 bis 1 Gew.-% mindestens eines Zusatzstoffes und
(F) 0,5 bis 5 Gew.-% einer organischen Lösung mindestens eines (Meth)Acrylatcopolymerisats mit einem Festkörpergehalt von, bezogen auf die Lösung (F), 50 bis 90 Gew.-%,
enthält.

Im folgenden wird die neue Bindemittellösung als "erfindungsgemäße Lösung" oder "erfindungsgemäßer Spot-Blender" bezeichnet.

Außerdem wurde das neue Verfahren zur KFZ-Kleinstreparatur im Teil gefunden, umfassend die Verfahrensschritte
(1) Reinigung der Schadstelle und ihrer Umgebung,
(2) Schleifen und erneute Reinigung der Schadstelle,
(3) gegebenenfalls Spachteln, Schleifen und Reinigen der Schadstelle,
(4) Applikation eines Füllers und Ablüften der resultierenden Füllerschicht oder alternativ Härten der Füllerschicht und Schleifen und Reinigen der resultierenden Füllerlackierung,
(5) Applikation eines Basislacks auf der Füllerschicht oder der Füllerlackierung, Ablüften der resultierenden Basislackschicht und gegebenfalls Entfernen des Overspray,
(6) Naß-in-naß-Applikation eines Klarlacks auf die Basislackschicht,
(7) Applikation eines Spot-Blender und
(8) Härten der applizierten Schichten,
wobei der Basislack durch pneumatische Applikation mit einer Sprühpistole deckend von außen, d. h. von der Originallackierung her, nach innen, d. h. zum Zentrum der Schadstelle hin, aufgetragen wird und wobei man als Spot-Blender die erfindungsgemäße Lösung verwendet.

Im folgenden wird das neue Verfahren zur KFZ-Kleinstreparatur im Teil als "erfindungsgemäßes Verfahren" bezeichnet.

Nicht zuletzt wurde das neue Spot-Repair-Set für das Training und die Durchführung des erfindungsgemäßen Verfahrens entwickelt, umfassend
- einen Koffer aus Metall,
- ein In-lay aus Schaumstoff im Boden des Koffers mit einer Vertiefung im Zentrum und zwei symmetrisch links und rechts davon angeordneten Vertiefungen, wobei
- die Vertiefung im Zentrum ein Gebinde mit der spritzfertigen erfindungsgemäßen Lösung enthält und
- die beiden Vertiefungen links und rechts davon je eine kleine Sprühpistole zur Durchführung des erfindungsgemäßen Verfahrens enthalten,
- ein In-lay aus Schaumstoff im Deckel des Koffers, worin
- ein Handbuch und eine CD-ROM, die das erfindungsgemäße Verfahren beschreiben, angeordnet sind.

Im folgenden wird das neue Spot-Repair-Set für das Training und die Durchführung des erfindungsgemäßen Verfahrens als "erfindungsgemäßes Set" bezeichnet.

Der Bestandteil (A) der erfindungsgemäßen Lösung ist mindestens ein, insbesondere ein, Alkyl- und/oder Cycloalkylacetat mit 3 bis 10 Kohlenstoffatomen im Alkylrest und/oder in Cycloalkylrest. Vorzugsweise enthält der Alkylrest 3 bis 5 Kohlenstoffatome.

Beispiele geeigneter Alkylreste sind demnach Propyl-, Isopropyl-, n-Butyl-, sec.-Butyl-, tert.-Butyl-, Pentyl-, Hexyl-, Heptyl-, Octyl-, Nonyl- oder Decyl-Reste. Beispiele geeigneter Cycloalkylreste sind Cyclopropyl-, Cyclobutyl-, Cyclopentyl-, Cyclohexyl- oder Norbornenylreste.

Erfindungsgemäß sind die Alkylreste, insbesondere Propyl-, Isopropyl-, n-Butyl-, sec.-Butyl-, tert.-Butyl- oder Pentylreste, von Vorteil und werden daher bevorzugt verwendet. Von diesen wird der n-Butylreste besonders bevorzugt verwendet. Bei dem besonders bevorzugt angewandten Bestandteil (A) handelt es sich demnach um n-Butylacetat.

Der Bestandteil (A) ist in der erfindungsgemäßen Lösung in einer Menge von, bezogen auf die Lösung 30 bis 50 Gew.-%, vorzugsweise 35 bis 45 und insbesondere 37 bis 43 Gew.-% enthalten.

Der Bestandteil (B) der erfindungsgemäße Lösung ist mindestens ein, insbesondere ein, Alkoxyalkyl-, Cycloalkoxyalkyl-, Alkoxycycloalkyl- und/oder Cycloalkoxycycloalkylacetat mit 1 bis 6 Kohlenstoffatomen im Alkoxy- und Alkylrest und mit 3 bis 10 Kohlenstoffatomen im Cycloalkoxy-, und Cycloalkylrest. Vorzugsweise enthält der Alkoxyrest 1 bis 3 Kohlenstoffatome und der Alkylrest 2 bis 4 Kohlenstoffatome.

Beispiele geeigneter Alkoxyreste sind Methoxy-, Ethoxy-, Propyloxy-, Butoxy-, Pentoxy-und Hexoxyreste, von denen der Methoxyrest besonders vorteilhaft ist und daher besonders bevorzugt angewandt wird.

Beispiele geeigneter Alkylreste sind die vorstehend beschriebenen, von denen der Propylrest besonders vorteilhaft ist und daher besonders bevorzugt angewandt wird.

Beispiele geeigneter Cycloalkylreste sind die vorstehend beschriebenen, insbesondere der Cyclohexylrest.

Beispiele geeigneter Cycloalkoxyreste sind Cyclopropyl-, Cyclobutyl-, Cyclopentyl-, Cyclohexyl- oder Norbornenylreste, insbesondere der Cyclohexyloxyrest.

Erfindungsgemäß sind Alkoxyreste und Alkylreste von Vorteil. Bei dem besonders bevorzugt angewandten Bestandteil (B) handelt es sich daher um Methoxypropylacetat, insbesondere 1-Methoxypropylacetat-2.

In der erfindungsgemäßen Lösung ist der Bestandteil (B) in einer Menge von, bezogen auf die Lösung, 30 bis 50, vorzugsweise 35 bis 45 und insbesondere 37 bis 43 Gew.-% enthalten.

Der Bestandteil (C) der erfindungsgemäßen Lösung ist mindestens ein, insbesondere ein Alkylaromat mit mindestens zwei, insbesondere 2 bis 3, Alkylresten mit mindestens 1 bis 6 Kohlenstoffatomen. Beispiele geeigneter Alkylreste sind die vorstehend beschriebenen. Hiervon ist der Methylrest besonders vorteilhaft und wird daher erfindungsgemäß besonders bevorzugt verwendet. Beispiele gut geeigneter Alkylaromaten sind daher o-, m- und p-Xylol sowie die technischen Gemische dieser Isomere, nachstehend zusammenfassend "Xylol" genannt, Mesitylen, Pseudocumol und Hemellitol, insbesondere aber Xylol.

Der Bestandteil (C) ist in der erfindungsgemäßen Lösung in einer Menge von, bezogen auf die Lösung, 10 bis 30, vorzugsweise und 15 bis 25 und insbesondere 17 bis 23 Gew.-% enthalten.

Der Bestandteil (D) der erfindungsgemäßen Lösung ist mindestens ein, insbesondere ein, Alkohol mit 1 bis 6 Kohlenstoffatomen im Molekül, vorzugsweise Methanol, Ethanol, Propanol und/oder Isopropanol, insbesondere aber Ethanol. Das Ethanol kann auch vergällt sein. Beispielsweise kann als Vergällungsmittel Methylethylketon in einer Menge von 1 bis 2 Gew.-%, bezogen auf Ethanol und Methylethylketon, angewandt werden.

Der Bestandteil (D) ist in der erfindungsgemäßen Lösung in einer Menge von, bezogen auf die Lösung, 0,01 bis 1, vorzugsweise 0,1 bis 0,4 und insbesondere 0,1 bis 0,3 Gew.-% enthalten.

Der Bestandteil (E) der erfindungsgemäßen Lösung ist mindestens ein Zusatzstoff. Vorzugsweise werden Zusatzstoffe verwendet, die auf dem Gebiet der Beschichtungsstoffe üblich und bekannt sind. Vorzugsweise werden oberflächeaktive Stoffe wie Netzmittel oder Verlaufmittel verwendet.

Beispiele geeigneter Netzmittel (D) sind Decalin, Tetralin, Siloxane, fluorhaltige Verbindungen, Carbonsäurehalbester, Phosphorsäureester, Polyacrylsäuren und deren Copolymere oder Polyurethane. Ergänzend wird auf das Lehrbuch »Lackadditive« von Johan Bieleman, Wiley-VCH, Weinheim, New York, 1998, und auf Römpp Lexikon Lacke und Druckfarben, Georg Thieme Verlag, Stuttgart, New York,1998, Seite 409, »Netzmittel« und Seite 602, »Verlauf(hilfs)mittel«, verwiesen.

Der Zusatzstoff ist in der erfindungsgemäßen Lösung in einer Menge von, bezogen auf die Lösung, 0,005 bis 1, vorzugsweise 0,01 bis 0,05 und insbesondere 0,02 bis 0,04 Gew.-% enthalten.

Der Bestandteil (F) ist mindestens eine, insbesondere eine, organische Lösung mindestens eines, insbesondere eines, (Meth)Acrylatcopolymerisats. Vorzugsweise werden Methacrylatcopolymerisate verwendet. Besonders bevorzugt angewandte Methacrylatcopolymerisate haben eine Hydroxylzahl > 100, insbesondere > 120, mg KOH/g. Die organische Lösung weist einen Festkörpergehalt von 50 bis 90, vorzugsweise 55 bis 85 besondere 60 bis 70 Gew.-%, jeweils bezogen auf die Lösung (F), auf.

Die (Meth)Acrylatcopolymerisate enthalten, jeweils bezogen auf ihre Gesamtmenge, bis zu 90, vorzugsweise bis zu 88, bevorzugt bis zu 86, besonders bevorzugt bis zu 84, ganz besonders bevorzugt bis zu 82 und insbesondere bis zu 80 Gew.-% an hydroxylgruppenhaltigen olefinisch ungesättigten Monomeren (a1) einpolymerisiert.

Beispiele geeigneter hydroxylgruppenhaltiger olefinisch ungesättigter Monomere (a1) sind 2-Allcyl-propan-1,3-diol-mono(meth)acrylate wie 2-Methyl-, 2-Ethyl-, 2-Propyl-, 2-Isopropyl- oder 2-n-Butyl-propan-1,3-diol-mono(meth)acrylat.

Weitere Beispiele geeigneter hydroxylgruppenhaltiger olefinisch ungesättigter Monomere (a1) sind Hydroxyalkylester der Acrylsäure, Methacrylsäure oder einer anderen alpha,beta-ethylenisch ungesättigten Carbonsäure, die (i) sich von einem Alkylenglykol ableiten, der mit der Säure verestert ist, oder (ii) durch Umsetzung der Säure mit einem Alkylenoxid wie Ethylenoxid oder Propylenoxid erhältlich sind, insbesondere Hydroxyalkylester der Acrylsäure, Methacrylsäure, Crotonsäure oder Ethacrylsäure, in denen die Hydroxyalkylgruppe bis zu 20 Kohlenstoffatome enthält, wie 2-Hydroxyethyl-, 3-Hydroxypropyl-, 3-Hydroxybutyl-, 4-Hydroxybutylacrylat, -methacrylat, -ethacrylat oder -crotonat; 1,4-Bis(hydroxymethyl)cyclohexan- oder Octahydro-4,7-methano-1H-inden-dimethanolmonoacrylat, -monomethacrylat, -monoethacrylat oder -monocrotonat; oder Umsetzungsprodukte aus cyclischen Estern, wie z.B. epsilon-Caprolacton und diesen Hydroxyalkylestern; oder olefinisch ungesättigte Alkohole wie Allylalkohol; oder Polyole wie Trimethylolpropanmono- oder diallylether oder Pentaerythritmono-, -di- oder -triallylether. Diese höherfunktionellen Monomeren (a1) werden im allgemeinen nur in untergeordneten Mengen verwendet. Im Rahmen der vorliegenden Erfindung sind hierbei unter untergeordneten Mengen an höherfunktionellen Monomeren (a1) solche Mengen zu verstehen, welche nicht zur Vernetzung oder Gelierung der (Meth)Acrylatcopolymerisate führen, es sei denn, sie sollen in der Form von vernetzten Mikrogelteilchen vorliegen.

Des weiteren kommt ethoxylierter und/oder propoxylierter Allylakohol, der von der Firma Arco Chemicals vertrieben wird, oder 2-Hydroxyalkylallylether, insbesondere 2-Hydroxyethylallylether, als Monomere (a1) in Betracht. Sofern verwendet, werden sie vorzugsweise nicht als alleinige Monomere (a1), sondern in einer Menge von 0,1 bis 10 Gew.-%, bezogen auf das (Meth)Acrylatcopolymerisat (A), eingesetzt.

Des weiteren kommen Umsetzungsprodukte aus Acrylsäure und/oder Methacrylsäure mit dem Glycidylester einer in alpha-Stellung verzweigten Monocarbonsäure mit 5 bis 18 Kohlenstoffatomen je Molekül, insbesondere eine Versatic®-Säure, oder anstelle der Umsetzungsprodukte eine äquivalente Menge Acryl-und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure (vgl. Römpp Lexikon Lacke und Druckfarben, Georg Thieme Verlag, Stuttgart, New York, 1998, »Versatic®-Säuren«, Seiten 605 und 606), umgesetzt wird.

Darüber hinaus enthalten die (Meth)Acrylatcopolymerisate weitere olefinisch ungesättigte Monomere (a2), deren Anteil mindestens 10, vorzugsweise mindestens 12, bevorzugt mindestens 14, besonders bevorzugt mindestens 16, ganz besonders bevorzugt mindestens 18 und insbesondere mindestens 20 Gew.-% beträgt.

Beispiele geeigneter Monomere (a2) sind
Monomere (a21):
   Im wesentlichen säuregruppenfreie (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobomyl-, Dicyclopentadienyl-, Octahydro-4,7-methano-1H-inden-methanol- oder tert.-Butylcyclohexyl(meth)acrylat; (Meth)Acrylsäureoxaalkylester oder - oxacycloalkylester wie Ethyltriglykol(meth)acrylat und Methoxyoligoglykol(meth)acrylat mit einem Molekulargewicht Mn von vorzugsweise 550 Dalton oder andere ethoxylierte und/oder propoxylierte hydroxylgruppenfreie (Meth)Acrylsäurederivate (weitere Beispiele geeigneter Monomere (a2) dieser Art sind aus der Offenlegungsschrift DE 196 25 773 A 1, Spalte 3, Zeile 65, bis Spalte 4, Zeile 20, bekannt). Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder - 1,4-diol-di(meth)acrylat; Trimethylolpropan-di- oder -tri(meth)acrylat; oder Pentaerythrit-di-, -tri- oder -tetra(meth)acrylat enthalten. Hinsichtlich der Mengen an höherfunktionellen Monomeren (a21) gilt das vorstehend bei den Monomeren (a2) Gesagte.
Monomere (a22):
   Mindestens eine Säuregruppe, vorzugsweise eine Carboxylgruppe, pro Molekül tragende ethylenisch ungesättigte Monomere oder ein Gemisch aus solchen Monomeren. Als Komponente (a22) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a22) verwendet werden. Als Monomere (a22) kommen desweiteren Maleinsäuremono(meth)acryloyloxyethylester, Bernsteinsäuremono(meth)acryloyloxyethylester und Phthalsäuremono(meth)acryloyloxyethylester sowie Vinylbenzoesäure (alle Isomere), alpha-Methylvinylbenzoesäure (alle Isomere) oder Vinylbenzsolsulfonsäure (alle Isomere) in Betracht. Weitere Beispiele säuregruppenhaltiger Monomere (a22) sind aus der Offenlegungsschrift DE 196 25 773 A 1, Spalte 2, Zeile 58, bis Spalte 3, Zeile 8, oder aus der internationalen Patentanmeldung WO 98/49205, Seite 3, Zeilen 23 bis 34, bekannt.
Monomere (a23):
   Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.
Monomere (a24):
   N,N-Diethylamino-alpha-methylstyrol (alle Isomere), N,N-Diethylaminostyrol (alle Isomere), Allylamin, Crotylamin, 2-Amino- oder 2-N-Methyl-, 2-N,N-Dimethyl-, 2-N-Ethyl-, 2-N,N-Diethyl-, 2-N-Propyl-, 2-N,N-Dipropyl-, 2-N-Butyl-, 2-N,N-Dibutyl-, 2-N-Cyclohexyl- oder 2-N,N-Cyclohexyl-methyl-amino- oder 2-N,N,N,N-Tetramethylammonium- oder 2-N,N-Dimethyl-N,N-diethylammonium-, 2-Tetramethylphosphonium- oder 2-Triethylsulfoniumethylacrylat, -ethylmethacrylat, -propylacrylat oder -propylmethacrylat oder 3-Amino- oder 3-N-Methyl-, 3-N,N-Dimethyl-, 3-N-Ethyl-, 3-N,N-Diethyl-, 3-N-Propyl-, 3 N,N-Dipropyl-, 3-N-Butyl-, 3-N,N-Dibutyl-, 3-N-Cyclohexyl- oder 3-N,N-Cyclohexyl-methyl-amino- oder 3-N,N,N,N-Tetramethylammonium- oder 3-N,N-Dimethyl-N,N-diethylammonium-, 3-Tetramethylphosphonium- oder 3-Triethylsulfonium-propylacrylat oder -propylmethacrylat.
Monomere (a25):
   Diarylethylene, insbesondere solche der allgemeinen Formel V:

   **R**^{**1**}**R**^{**2**}**C=CR**^{**3**}**R**^{**4**} (V),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl-cyclohexan. Beispiele geeigneter Cycloalkylalkylreste sind 2-, 3- oder 4-Methyl-, -Ethyl-, -Propyl- oder -Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-, 3- oder 4-Phenylcyclohex-1-yl. Beispiele geeigneter Arylalkylreste sind 2-, 3- oder 4-Methyl-, -Ethyl-, -Propyl- oder -Butylphen-1-yl. Beispiele geeigneter Arylcycloalkylreste sind 2-, 3- oder 4-Cyclohexylphen-1-yl. Vorzugsweise handelt es sich bei den Arylresten R¹, R², R³ und/oder R⁴ um Phenyl- oder Naphthylreste, insbesondere Phenylreste. Die in den Resten R¹, R², R³ und/oder R⁴ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; Arylthio-, Alkylthio- und Cycloalkylthioreste und/oder primäre, sekundäre und/oder tertiäre Amionogruppen. Besonders vorteilhaft sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol), insbesondere Diphenylethylen (DPE), weswegen sie bevorzugt verwendet werden. Im Rahmen der vorliegenden Erfindung werden die Monomeren (a25) eingesetzt, um die Copolymerisation in vorteilhafter Weise derart zu regeln, daß auch eine radikalische Copolymerisation in Batch-Fahrweise möglich ist.
Monomere (a26):
   Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
Monomere (a27):
   Amidogruppenhaltige Monomere wie (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid; carbamatgruppenhaltige Monomere wie (Meth)Acryloyloxyethylcarbamat oder (Meth)Acryloyloxypropylcarbamat; oder harnstoffgruppenhaltige Monomere wie Ureidoacrylat oder -methacrylat.
Monomere (a28):
   Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
Monomere (a29):
   Vinylaromatische Kohlenwasserstoffe wie Styrol, Vinyltoluol, Diphenylethylen oder alpha-Alkylstyrole, insbesondere alpha-Methylstyrol.
Monomere (a210):
   Nitrile wie Acrylnitril und/oder Methacrylnitril.
Monomere (a211):
   Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam oder N-Vinylpyrrolidon; 1-Vinylimidazol; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
Monomere (a212):
   Allylverbindungen, insbesondere Allylether und -ester wie Allylmethyl-, -ethyl-, -propyl- oder -butylether oder Allylacetat, -propionat oder -butyrat.
Monomere (a213):
   Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 3807571 A 1 auf den Seiten 5 bis 7, der-DE-37 06 095 A 1 in den Spalten 3 bis 7, der EP 0 358 153 B 1 auf den Seiten 3 bis 6, in der US 4,754,014 A in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind.
   und/oder
Monomere (a214):
   Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder - cycloalkylestem der (Meth)Acrylsäure und/oder weiterer hydroxylgruppehaltiger. Monomere (a2).

Besonders bevorzugte Monomere (a2) sind die Monomeren (a21), (a22) und (a29).

Die erfindungsgemäß zu verwendenden Methacrylatcopolymerisatlösungen sind handelsübliche Produkte und werden beispielsweise von der Firma BASF Coatings AG unter dem Handelsnamen Glasurit® Racing Clear 923-144 vertrieben.

Die Herstellung der erfindungsgemäß zu verwendenden (Meth)Acrylatcopolymerisate weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung , Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von 50 bis 200°C.

Beispiele geeigneter Copolymerisationsverfahren werden in den Patentanmeldungen DE 197 09 465 A 1, DE 197 09 476 A 1, DE 28 48 906 A 1, DE 195 24 182 A 1, DE 198 28 742 A 1, DE 196 28 143 A 1, DE 196 28 142 A 1, EP 0 554 783 A 1, WO 95/27742, WO 82/02387 oder WO 98/02466 beschrieben.

Beispiele geeigneter radikalischer Initiatoren sind Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl-hexanoat oder tert.-Butyiper-2-ethylhexanoat; Peroxodicarbonate; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Es können auch Kombinationen der vorstehend beschriebenen Initiatoren eingesetzt werden.

Weitere Beispiele geeigneter Initiatoren werden in der deutschen Patentanmeldung DE 196 28 142 A 1, Seite 3, Zeile 49, bis Seite 4, Zeile 6, beschrieben.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,2 bis 20 Gew.-%, ganz besonders bevorzugt 0,5 bis 15 Gew.-% und insbesondere 1,0 bis 12 Gew.-% beträgt.

Des weiteren können Thiocarbonylthio-Verbindungen oder Mercaptane wie Dodecylmercaptan als Kettenübertragungsmittel oder Molekulargewichtsregler verwendet werden.

Die organische Lösung (F) ist in der erfindungsgemäßen Lösung in einer Menge von, bezogen auf die erfindungsgemäße Lösung, 0,5 bis 5, vorzugsweise 1 bis 4 und insbesondere 2 bis 3 Gew.-% enthalten.

Eine besonders vorteilhafte erfindungsgemäße Lösung besteht aus
- 39 Gew.-% Butylacetat (98 bis 100%ig),
- 38,77 Gew.-% 1-Methoxypropylacetat-2,
- 19,5 Gew.-% Xylol,
- 0,2 Gew.-% Ethanol (vergällt mit 1 Gew.-% Methylethylketon),
- 0,03 Gew.-% eines siloxangruppenhaltigen Verlaufmittels und
- 2,5 Gew.-% einer Lösung eines Methacrylatcopolymerisats eines Festkörpergehalts von 65 Gew.-%.

Die erfindungsgemäße Spot-Blender ist frei von Toluol und unterliegt keiner Kennzeichnungspflicht.

Die Herstellung der erfindungsgemäße Lösung weist keine methodischen Besonderheiten auf, sondern erfolgt durch Vermischen der Bestandteile in einem geeigneten Rührgefäß.

Die erfindungsgemäße Lösung wird im Rahmen des erfindungsgemäßen Verfahrens als Spot-Blender eingesetzt.

Das erfindungsgemäße Verfahren umfaßt die folgenden Verfahrensschritte:
(1) Reinigung der Schadstelle und ihrer Umgebung,
(2) Schleifen und erneute Reinigung der Schadstelle,
(3) gegebenenfalls Spachteln, Schleifen und Reinigen der Schadstelle,
(4) Applikation eines Füllers und Ablüften der resultierenden Füllerschicht oder alternativ Härten der Füllerschicht und Schleifen und Reinigen der resultierenden Füllerlackierung,
(5) Applikation eines Basislacks auf der Füllerschicht oder der Füllerlackierung, Ablüften der resultierenden Basislackschicht und gegebenenfalls Entfernen des Overspray,
(6) Naß-in-naß-Applikation eines Klarlacks auf die Basislackschicht,
(7) Applikation eines Spot-Blender und
(8) Härten der applizierten Schichten,

Für das erfindungsgemäße Verfahren ist es wesentlich, daß der Basislack durch pneumatische Applikation mit einer Sprühpistole deckend von außen, d. h. von der Originallackierung her, nach innen, d. h. zum Zentrum der Schadstelle hin, aufgetragen wird. Außerdem ist es wesentlich daß man als Spot-Blender die vorstehend im Detail beschriebene erfindungsgemäße Lösung verwendet.

Für die pneumatische Applikation der Beschichtungsstoffe können an und für sich übliche und bekannte Sprühpistolen verwendet werden. Erfindungsgemäß ist es indes von Vorteil, kleinere Sprühpistolen als die üblichen und bekannten zu verwenden. Solche kleindimensionierten Sprühpistolen sind von der Firma SATA, Komwestheim, unter dem Handelsnamen SATA minijet 2 HVLP SR (Spot-Repair) erhältlich.

Für die Reinigung und das Schleifen können die Reinigungsgeräte und - flüssigkeiten sowie Schleif- und/oder Poliergeräte verwendet werden, wie sie üblicherweise für die Autoreparaturlackierung eingesetzt werden.

Für das Spachteln können übliche und bekannte Spachtel wie die der Firma Sikkens angewandt werden.

Als Füller kommen übliche und bekannte wäßrige und konventionelle Füller in Betracht, wie sie beispielsweise in den Patenten und Patentanmeldungen US 4,537,926 A , EP 0 529 335 A 1, EP 0 595 186 A 1, EP 0 639 660 A 1, DE 44 38 504 A 1, DE 43 37 961 A 1, WO 89,/10387, US 4,450,200 A , US 4,614,683 A oder WO 490/26827 beschrieben werden.

Die Füller sind handelsübliche Produkte, die beispielsweise von der Firma BASF Coatings AG unter der Marke Glasurit® Wasserfüller 70-71 oder 1K-Grundfüller 76-71 vertrieben werden.

Beispiele geeigneter konventioneller oder wäßriger Basislacke sind aus den Patentanmeldungen EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A 1, EP 0 574 417 A 1, EP 0 531 510 A 1, EP 0 581 211 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401565 A 1 oder EP 0 817 684, Spalte 5, Zeilen 31 bis 45, bekannt. Es können auch die Basislacke auf der Grundlage des Mischsystems verwendet werden, das in der europäischen Patentanmeldung EP 0 578 645 A 1 beschrieben wird.

Die Basislacke sind handelsübliche Produkte, die beispielsweise von der Firma BASF Coatings AG unter den Marken Glasurit® Decklack-Reihe 55 mit Glasurit® Einstellenzusatz 352-91 oder Glasurit® Decklack-Reihe 90 mit Glasurit® Einstellenzusatz 93-E 3 und Glasurit® Beispritzlack 90-M5 gemäß der europäischen Patentanmeldung EP 0 578 645 A 1 vertrieben werden.

Als Klarlacke können alle üblichen und bekannten Zweikomponentenklarlacke auf der Basis von handelsüblichen hydroxylgruppenhaltigen Bindemitteln, wie den vorstehend beschriebenen, beispielsweise Glasurit® Racing-Clear 923-144, und Polyisocyanaten wie Glasurit® MS-Härter 929-71 (beides von der Firma BASF Coatings AG) verwendet werden.

Die Härtung der applizierten Beschichtungsstoffe weist ebenfalls keine Besonderheiten auf, sondern erfolgt mit üblichen und bekannten Vorrichtungen wie Heizstrahlern, die nahes oder fernes Infrarotlicht verwenden, oder Heizgebläsen.

Das erfindungsgemäße Verfahren eignet sich insbesondere für den Spot-Repair von Schäden bis 3 cm Durchmesser. Die Schadstelle sollen ohne Deformationen wie Beulen, Kratzer oder Steinschläge sein. Besonders empfehlenswert ist der Spot-Repair an stehenden Flächen. Bei liegenden Flächen wird das erfindungsgemäße Verfahren vorteilhafterweise im Nahbereich von Kanten (Abstand bis zu 15 cm) angewandt.

Durch das erfindungsgemäße Verfahren können die Schleif- und/oder Polierzeiten im Vergleich zu herkömmlichen Verfahren um mehr als 50% gesenkt werden. Es liefert Reparaturlackierungen, die sich optisch nicht mehr von der Originallackierung abheben. Ein Ausreißen oder Wegbrechen der Reparatur-Klarlackierung in den Auslaufzonen wird nicht mehr beobachtet. Die Reparaturlackierungen sind von so hoher Qualität, daß sie auch zur KFZ-Kleinstreparatur im Teil von Originallackierungen in der Linie verwendet werden können. Aufgrund der hohen i.O.-Rate werden dabei erhebliche wirtschaftliche Vorteile erzielt.

Um den Anwendern im Lackierbetrieb oder in der Linie beim KFZ-Hersteller das Training und Durchführung des erfindungsgemäßen Verfahrens zu erleichtern wird das erfindungsgemäße Set bereitgestellt. Das erfindungsgemäße Set umfaßt:
- einen Koffer aus Metall und/oder oder einem kratzfesten stabilen Kunststoff,
- ein In-lay aus Schaumstoff im Boden des Koffers mit einer Vertiefung im Zentrum und zwei symmetrisch links und rechts davon angeordneten Vertiefungen, wobei
- die Vertiefung im Zentrum ein Gebinde, vorzugsweise ein 0,5 1-Gebinde, mit der spritzfertigen erfindungsgemäßen Lösung enthält und
- die beiden Vertiefungen links und rechts davon je eine kleine Sprühpistole, insbesondere die kleindimensionierte Sprühpistole SATA minijet 2 HVLP SR der Firma SATA, Komwestheim, zur Durchführung des erfindungsgemäßen Verfahrens enthalten,
- ein In-lay aus Schaumstoff im Deckel des Koffers, worin
- ein Handbuch und eine CD-ROM, die das erfindungsgemäße Verfahren im Detail beschreiben beschreiben, angeordnet sind.

Darüber hinaus kann das erfindungsgemäße Set noch eine Empfehlungsliste für sonstige Produkte und Vorrichtungen, wie sie üblicherweise bei der KFZ-Reparaturlackierung verwendet werden, enthalten.

Der Koffer ist so dimensioniert, daß die Sprühpistolen und das Gebinde ohne räumliche Enge gefällig und blickfangmäßig präsentiert werden können. Außerdem sind die In-lays und die Vertiefungen so ausgestaltet, daß das Gebinde, die Sprühpistolen, das Handbuch und die CD-ROM sicher gelagert sind. Durch das erfindungsgemäße Set erhält der Fachmann in kompakter Form alle technischen Informationen und Vorrichtungen, die er für das Training und die Durchführung des erfindungsgemäßen Verfahrens benötigt. Dadurch wird die Einführung des erfindungsgemäßen Verfahrens in die Praxis erheblich erleichtert, so daß im Lackierbetrieb auch keine sicherheitstechnischen Probleme bei der Einführung und Durchführung auftreten.

### Beispiele

### Beispiel 1

### Die Herstellung einer erfindungsgemäßen Lösung

Es wurde eine erfindungsgemäße Lösung durch Vermischen der folgenden Bestandteile hergestellt:
- 39 Gewichtsteile Butylacetat (98 bis 100%ig),
- 38,77 Gewichtsteile 1-Methoxypropylacetat-2,
- 19,5 Gewichtsteile Xylol,
- 0,2 Gewichtsteile Ethanol (vergällt mit 1 Gew.-% Methylethylketon),
- 0,03 Gewichtsteile eines siloxangruppenhaltigen Verlaufmittels (Baysilon® OL 44; 100%ig) und
- 2,5 Gewichtsteile einer Lösung eines Methacrylatcopolymerisats aus Hydroxypropylmethacrylat, Butylmethacrylat, Styrol, Methacrylsäure und Methylmethacrylat in Butylacetat (98 bis 100%ig) und Solvesso® 100 (Festkörpergehalt: 65 Gew.-%) (Glasurit® Racing Clear 923-144).

Die Lösung war hervorragend als Spot-Blender geeignet.

### Beispiel 2

### KFZ-Kleinstreparatur im Teil am Stoßfänger eines Nissan Almera

Bei der Schadstelle handelte es sich um einen 4 bis 5 cm langen Kratzer im hinteren Stoßfänger, der durch einen Schlüssel verursacht worden war und zum Teil bis zum Substrat hinunterreichte. Es wurden die nachstehend angegebenen Vorrichtungen, Stoffe und Verfahrensschritte angewandt.

### Reinigen:

1. Sprühdose mit Teroson Intensiv-Scheibenreiniger
2. Finish-Kontrollspray 55535 der Firma 3M
3. Sprühflasche mit Nitroverdünnung M600 der Firma Akzo
4. Putztücher Kimberley Clark Classic

### Schleifen:

### Lackpfeile

Schleifblüte P 1500 der Firma 3M

### Spachteln:

Spachtel der Firma Sikkens in der Kombi-Füller-Tube
Ablüftzeit: 10 Minuten/20°C
Schleifen: naß (Sprühflasche) mit Schleifblüte P 1000 der Firma 3M

### Abkleben:

Papier und Abdeckband der Firma 3M

### Basislack:

Glasurit®Decklack Reihe 55-NIS AV3 der Firma BASF Coatings AG mit rotem Perleffekt
Sprühpistole: SATA minijet grün (1,0 NR); Spritzdruck: 1,5 bar
Schadstelle von außen zum Zentrum hin deckend und auslaufend großflächig in die Fläche gespritzt
Ablüften: zwei bis drei Minuten

### Klarlack:

Glasurit® Klarlack 923-155 aus Glasurit® Racing Clear 923-144, Glasurit®MS-Härter 929-71 und Glasurit®Einstellzusatz 352-91 (Mischungsverhältnis: 2 : 1 + 10%)
Sprühpistole: SATA minijet NR 2000
Schadstelle auslaufend über die Stirnfläche des Stoßfängers gespritzt

### Spot-Blender gemäß Beispiel 1:

Sprühpistole: SATA minijet NR 2000
Schadstelle über die Auslaufzonen des Klarlacks im Bereich der linken und rechten Ecke des Stoßfängers gespritzt

### Trocknung:

Infrarotstrahler, 20 Minuten, 50% der maximalen Intensität

### Polieren:

### kein Polieren notwendig

Die Schadstelle war hiernach auch ohne Polieren optisch und mechanisch hervorragend an die Originallackierung angepaßt.

### Beispiel 2

### KFZ-Kleinstreparatur im Teil am Kotflügel eines Nissan Almera

Bei der Schadstelle handelte es sich um einen Kratzer am vorderen linken Kotflügel über dem Radlauf. Es wurden die nachstehend angegebenen Vorrichtungen, Stoffe und Verfahrensschritte angewandt.

### Reinigen:

Glasurit® Reinigungsmittel 700-1 Sprühflasche
Putztücher Kimberley Clark Classic und Hamach Staubbindetuch

### Schleifen:

Nass (Sprühflasche) mit kletthinterlegtem Schleifpapier aus der OEM-Lackierlinie Nissan UK (SIA P1500)
Oberflächekontrolle mit den Fingern

### Spachteln:

Spachtel der Firma Sikkens in der Kombi-Füller-Tube
Ablüftzeit: 10 Minuten/20°C

### Schleifen:

Nass (Sprühflasche) mit kletthinterlegtem Schleifpapier aus der OEM-Lackierlinie Nissan UK (SIA P1500)
Oberflächekontrolle mit den Fingern
Trocken mit Scotch-Brite grau

### Abkleben:

Papier und Abdeckband der Firma 3M
Taschen und abgerundete, weiche Kanten

### Basislack:

Glasurit®Decklack Reihe 90-NIS BT3 der Firma BASF Coatings AG mit blauem Perleffekt
Sprühpistole: SATA minijet NR 2000; Spritzdruck: 2 bar
Schadstelle von außen zum Zentrum hin deckend und auslaufend großflächig in die Fläche gespritzt
Ablüften: zwei bis drei Minuten

### Klarlack:

Glasurit® Klarlack 923-155 aus Glasurit® Racing Clear 923-144, Glasurit®MS-Härter 929-71 und Glasurit®Einstellzusatz 352-91 (Mischungsverhältnis: 2 : 1 + 10%)
Sprühpistole: SATA minijet NR 2000; Spritzdruck: 2 bar
Schadstelle auslaufend über die Stirnfläche des Stoßfängers gespritzt

### Spot-Blender gemäß Beispiel 1:

Sprühpistole: SATA minijet NR 2000
Schadstelle links und rechts über die Auslaufzonen des Klarlacks gespritzt

### Polieren:

Tropfenmarkierung angeschliffen (Karosseriepfeile)
Polieren: mit 09639 Finesse der Firma 3M mit druckluftbetriebener Polierenmaschine mit kleinem Teller und Schwamm der Firma 3M
Polish: mit 03990 Imperial der Firma 3M von Hand mit Poliertüchern

Die Schadstelle war hiernach optisch und mechanisch hervorragend an die Originallackierung angepaßt.

## Patentansprüche

1. Bindemittellösung, enthaltend, bezogen auf die Lösung,
(A) 30 bis 50 Gew.-% mindestens eines Alkyl- und/oder Cycloalkylacetats mit 3 bis 10 Kohlenstoffatomen im Alkylrest und/oder im Cycloalkylrest,
(B) 30 bis 50 Gew.-% mindestens eines Alkoxyalkyl-, Cycloalkoxyalkyl-, Alkoxycycloalkyl- und/oder Cycloalkoxycycloalkylacetats mit 1 bis 6 Kohlenstoffatomen im Alkoxy- und Alkylrest und mit 3 bis 10 Kohlenstoffatomen im Cycloalkoxy- und Cycloalkylrest,
(C) 10 bis 30 Gew.-% mindestens eines Alkylaromaten mit mindestens zwei Alkylresten mit 1 bis 6 Kohlenstoffatomen,
(D) 0,01 bis 1 Gew.-% mindestens eines Alkohols mit 1 bis 6 Kohlenstoffatomen im Molekül,
(E) 0,005 bis 1 Gew.-% mindestens eines Zusatzstoffes und
(F) 0,5 bis 5 Gew.-% einer organischen Lösung mindestens eines (Meth)Acrylatcopolymerisats mit einem Festkörpergehalt von, bezogen auf die Lösung (F), 50 bis 90 Gew.-%.

2. Bindemittellösung nach Anspruch 1, **dadurch gekennzeichnet, daß** sie, bezogen auf die Lösung, 35 bis 45 Gew.-% mindestens eines Alkylacetats (A) mit 3 bis 5 Kohlenstoffatomen im Alkylrest enthält.

3. Bindemittellösung nach Anspruch 1 oder 2, **dadurch gekennzeichnet, daß** sie, bezogen auf die Lösung, 30 bis 45 Gew.-% mindestens eines Alkoxyalkylacetats (B) mit 1 bis 3 Kohlenstoffatomen im Alkoxyrest und 2 bis 4 Kohlenstoffatomen im Alkylrest enthält.

4. Bindemittellösung nach einem der Ansprüche 1 bis 3, **dadurch gekennzeichnet, daß** sie, bezogen auf die Lösung, 15 bis 25 Gew.-% mindestens eines Alkylaromaten (C) mit 2 bis 3 Methylgruppen im Molekül enthält.

5. Bindemittellösung nach einem der Ansprüche 1 bis 4, **dadurch gekennzeichnet, daß** sie, bezogen auf die Lösung, 0,1 bis 0,4 Gew.-% Methanol, Ethanol, Propanol und/oder Isopropanol (D) enthält.

6. Bindemittellösung nach einem der Ansprüche 1 bis 5, **dadurch gekennzeichnet, daß** sie, bezogen auf die Lösung, 0,01 bis 0,5 Gew.-% mindestens eines Netzmittels (E) enthält.

7. Bindemittellösung nach einem der Ansprüche 1 bis 6, **dadurch gekennzeichnet, daß** sie, bezogen auf die Lösung, 1 bis 3 Gew.-% mindestens einer organischen Lösung (F) eines (Meth)Acrylatcopolymerisats mit einem Festkörpergehalt, bezogen auf die Lösung (F), von 60 bis 70 Gew.-%, enthält.

8. Bindemittellösung nach einem der Ansprüche 1 bis 7, **dadurch gekennzeichnet, daß** als Bestandteil (A) Butylacetat verwendet wird.

9. Bindemittellösung nach einem der Ansprüche 1 bis 8, **dadurch gekennzeichnet, daß** als Bestandteil (B) 1- Methoxypropylacetat-2 verwendet wird.

10. Bindemittellösung nach einem der Ansprüche 1 bis 9, **dadurch gekennzeichnet, daß** als Bestandteil (C) Xylol verwendet wird.

11. Bindemittellösung nach einem der Ansprüche 1 bis 10, **dadurch gekennzeichnet, daß** als Bestandteil (D) Ethanol verwendet wird.

12. Bindemittellösung nach einem der Ansprüche 1 bis 11, **dadurch gekennzeichnet, daß** das Methacrylatcopolymerisat eine Hydroxylzahl > 100 mg KOH/g aufweist.

13. Verwendung der Bindemittellösung gemäß einem der Ansprüche 1 bis 12 als Spot-Blender für die KFZ-Kleinstreparatur im Teil.

14. Verfahren zur KFZ-Kleinstreparatur im Teil, umfassend die Verfahrensschritte
(1) Reinigung der Schadstelle und ihrer Umgebung,
(2) Schleifen und erneute Reinigung der Schadstelle,
(3) gegebenenfalls Spachteln, Schleifen und Reinigen der Schadstelle,
(4) Applikation eines Füllers und Ablüften der resultierenden Füllerschicht oder alternativ Härten der Füllerschicht und Schleifen und Reinigen der resultierenden Füllerlackierung,
(5) Applikation eines Basislacks auf der Füllerschicht oder der Füllerlackierung, Ablüften der resultierenden Basislackschicht und gegebenenfalls Entfernen des Overspray,
(6) Naß-in-naß-Applikation eines Klarlacks auf die Basislackschicht,
(7) Applikation eines Spot-Blender und
(8) Härten der applizierten Schichten,
**dadurch gekennzeichnet, daß** der Basislack durch pneumatische Applikation mit einer Sprühpistole deckend von außen, d. h. von der Originallackierung her, nach innen, d. h. zum Zentrum der Schadstelle hin, aufgetragen wird und daß man als Spot-Blender die Bindemittellösung gemäß einem der Ansprüche 1 bis 12 verwendet.

15. Verfahren nach Anspruch 14, **dadurch gekennzeichnet, daß** man kleine Sprühpistolen verwendet.

16. Spot-Repair-Set für das Training und die Durchführung des Verfahrens gemäß Anspruch 14 oder 15, umfassend
- einen Koffer aus Metall und/oder einem stabilen kratzfesten Kunststoff,
- ein In-lay aus Schaumstoff im Boden des Koffers mit einer Vertiefung im Zentrum und zwei symmetrisch links und rechts davon angeordneten Vertiefungen, wobei
- die Vertiefung im Zentrum ein Gebinde mit der spritzfertigen Bindemittellösung gemäß einem der Ansprüche 1 bis 12 enthält und
- die beiden Vertiefungen links und rechts davon je eine kleine Sprühpistole zur Durchführung des Verfahrens gemäß einem der Ansprüche 13 bis 15 enthalten,
- ein In-lay aus Schaumstoff im Deckel des Koffers, worin
- ein Handbuch und eine CD-ROM, die das Verfahren gemäß einem der Ansprüche 13 bis 15 beschreiben, angeordnet sind.

## Claims

1. A binder solution comprising, based on the solution,
(A) from 30 to 50% by weight of at least one alkyl and/or cycloalkyl acetate of 3 to 10 carbon atoms in the alkyl and/or cycloalkyl radical,
(B) from 30 to 50% by weight of at least one alkoxyalkyl, cycloalkoxyalkyl, alkoxycycloalkyl and/or cycloalkoxycycloalkyl acetate of 1 to 6 carbon atoms in the alkoxy and alkyl radical and of 3 to 10 carbon atoms in the cycloalkoxy and cycloalkyl radical,
(C) from 10 to 30% by weight of at least one alkylaromatic compound having at least two alkyl radicals of 1 to 6 carbon atoms,
(D) from 0.01 to 1% by weight of at least one alcohol of 1 to 6 carbon atoms in the molecule,
(E) from 0.005 to 1% by weight of at least one additive, and
(F) from 0.5 to 5% by weight of an organic solution of at least one (meth)acrylate copolymer having a solids content, based on the solution (F), of from 50 to 90% by weight.

2. The binder solution as claimed in claim 1, comprising, based on the solution, from 35 to 45% by weight of at least one alkyl acetate (A) of 3 to 5 carbon atoms in the alkyl radical.

3. The binder solution as claimed in claim 1 or 2, comprising, based on the solution, from 30 to 45% by weight of at least one alkoxyalkyl acetate (B) of 1 to 3 carbon atoms in the alkoxy radical and 2 to 4 carbon atoms in the alkyl radical.

4. The binder solution as claimed in any of claims 1 to 3, comprising, based on the solution, from 15 to 25% by weight of at least one alkylaromatic compound (C) having from 2 to 3 methyl groups in the molecule.

5. The binder solution as claimed in any of claims 1 to 4, comprising, based on the solution, from 0.1 to 0.4% by weight of methanol, ethanol, propanol and/or isopropanol (D).

6. The binder solution as claimed in any of claims 1 to 5, comprising, based on the solution, from 0.01 to 0.5% by weight of at least one wetting agent (E).

7. The binder solution as claimed in any of claims 1 to 6, comprising, based on the solution, from 1 to 3% by weight of at least one organic solution (F) of a (meth)acrylate copolymer having a solids content, based on the solution (F), of from 60 to 70% by weight.

8. The binder solution as claimed.in any of claims 1 to 7, wherein butyl acetate is used as constituent (A).

9. The binder solution as claimed in any of claims 1 to 8, wherein 1-methoxypropyl 2-acetate is used as constituent (B).

10. The binder solution as claimed in any of claims 1 to 9, wherein xylene is used as constituent (C).

11. The binder solution as claimed in any of claims 1 to 10, wherein ethanol is used as constituent (D).

12. The binder solution as claimed in any of claims 1 to 11, wherein the methacrylate copolymer has a hydroxyl number > 100 mg KOH/g.

13. The use of the binder solution as claimed in any of claims 1 to 12 as a spot blender for automotive spot repair.

14. An automotive spot repair process comprising the steps of
(1) cleaning the damage site and its surroundings,
(2) sanding and recleaning the damage site,
(3) if desired, filling, sanding and cleaning the damage site,
(4) applying a filler and flashing off the resultant filler film, or alternatively curing the filler film and sanding and cleaning the resultant filler coat,
(5) applying a basecoat material to the filler film or filler coat, flashing off the resultant basecoat film, and removing any overspray,
(6) applying a clearcoat material wet-on-wet to the basecoat film,
(7) applying a spot blender, and
(8) curing the applied films,
which comprises applying the basecoat material hidingly by pneumatic application with a spray gun from the outside, i.e. from the original finish, inward, i.e. toward the center of the damage site, and wherein said spot blender comprises the binder solution as claimed in any of claims 1 to 12.

15. The process as claimed in claim 14, wherein small spray guns are used.

16. A spot repair set for training and for implementing the process as claimed in claim 14 or 15, comprising
- a case made of metal and/or of scratch-resistant stable plastic,
- in the base of the case, a foam inlay with a depression in the center and two depressions symmetrically left and right thereof,
- the depression in the center containing a can of the ready-to-spray binder solution as claimed in any of claims 1 to 12 and
- the two depressions left and right thereof each containing a small spray gun for implementing the process as claimed in either of claims 14 and 15,
- a foam inlay in the lid of the case, containing
- a manual and a CD-ROM which describe the process as claimed in either of claims 14 and 15.

## Revendications

1. Solution de liant, contenant, par rapport à la solution :
(A) 30 à 50% en poids d'au moins un acétate d'alkyle et/ou de cycloalkyle avec de 3 à 10 atomes de carbone dans le radical alkyle et/ou dans le radical cycloalkyle,
(B) 30 à 50% en poids d'au moins un acétate d'alcoxyalkyle, de cycloalcoxyalkyle, d'alcoxycycloalkyle et/ou de cycloalcoxycycloalkyle avec de 1 à 6 atomes de carbone dans le radical alcoxy et alkyle et avec de 3 à 10 atomes de carbone dans le radical cycloalcoxy et cycloalkyle,
(C) 10 à 30% en poids d'au moins un composé alkylaromatique avec au moins deux radicaux alkyle ayant de 1 à 6 atomes de carbone,
(D) 0,01 à 1% en poids d'au moins un alcool avec de 1 à 6 atomes de carbone dans la molécule,
(E) 0,005 à 1% en poids d'au moins un additif et
(F) 0,5 à 5% en poids d'une solution organique d'au moins un polymérisat de (méth)acrylate avec une teneur en matières solides, par rapport à la solution (F), de 50 à 90% en poids.

2. Solution de liant selon la revendication 1, **caractérisée en ce qu'**elle contient, par rapport à la solution, de 35 à 45% en poids d'au moins un acétate d'alkyle (A) avec de 3 à 5 atomes de carbone dans le radical alkyle.

3. Solution de liant selon la revendication 1 ou 2, **caractérisée en ce qu'**elle contient, par rapport à la solution, de 30 à 45% en poids d'au moins un acétate d'alcoxyalkyle (B) avec de 1 à 3 atomes de carbone dans le radical alcoxy et de 2 à 4 atomes de carbone dans le radical alkyle.

4. Solution de liant selon l'une quelconque des revendications 1 à 3, **caractérisée en ce qu'**elle contient, par rapport à la solution, de 15 à 25% en poids d'au moins un composé alkylaromatique (C) avec de 2 à 3 groupes méthyle dans la molécule.

5. Solution de liant selon l'une quelconque des revendications 1 à 4, **caractérisée en ce qu'**elle contient, par rapport à la solution, de 0,1 à 0,4% en poids de méthanol, éthanol, propanol et/ou isopropanol (D).

6. Solution de liant selon l'une quelconque des revendications 1 à 5, **caractérisée en ce qu'**elle contient, par rapport à la solution, de 0,01 à 0,5% en poids d'au moins un agent mouillant (E).

7. Solution de liant selon l'une quelconque des revendications 1 à 6, **caractérisée en ce qu'**elle contient, par rapport à la solution, de 1 à 3% en poids d'au moins une solution organique (F) d'un copolymérisat de (méth)acrylate avec une teneur en matières solides, par rapport à la solution (F), de 60 à 70% en poids.

8. Solution de liant selon l'une quelconque des revendications 1 à 7, **caractérisée en ce que** l'on utilise comme constituant (A) l'acétate de butyle.

9. Solution de liant selon l'une quelconque des revendications 1 à 8, **caractérisée en ce que** l'on utilise comme constituant (B) le 1-méthoxypropylacétate-2.

10. Solution de liant selon l'une quelconque des revendications 1 à 9, **caractérisée en ce que** l'on utilise comme constituant (C) le xylène.

11. Solution de liant selon l'une quelconque des revendications 1 à 10, **caractérisée en ce qu'**elle contient comme constituant (D) l'éthanol.

12. Solution de liant selon l'une quelconque des revendications 1 à 11, **caractérisée en ce que** le copolymérisat de méthacrylate présente un indice d'hydroxyle > 100 mg KOH/g.

13. Utilisation de la solution de liant selon l'une des revendications 1 à 12 comme mélangeur ponctuel (spot blender) pour les petits travaux de carrosserie automobile.

14. Procédé pour de petits travaux de carrosserie automobile, comprenant les étapes de procédé
(1) nettoyage de l'endroit endommagé et de son pourtour,
(2) ponçage et nouveau nettoyage de l'endroit endommagé,
(3) éventuellement bouchage au mastic, ponçage et nettoyage de l'endroit endommagé,
(4) application d'un mastic et évacuation de l'air de la couche de mastic résultante ou autrement durcissement de la couche de mastic et ponçage et nettoyage de la peinture de mastic résultante,
(5) application d'une peinture de base sur la couche de mastic ou la peinture de mastic, évacuation de l'air de la couche de peinture de base résultante et éventuellement élimination de l'excès de projection (overspray),
(6) application humide-sur-humide d'un vernis incolore sur la couche de peinture de base,
(7) application d'un mélangeur ponctuel et
(8) durcissement des couches appliquées,
**caractérisé en ce que** la peinture de base est déposée par application pneumatique avec un pistolet de pulvérisation couvrant de l'extérieur, c'est-à-dire à partir de la peinture d'origine, vers l'intérieur, c'est-à-dire vers le centre de l'endroit endommagé, et **en ce que** l'on utilise comme mélangeur ponctuel la solution de liant selon l'une quelconque des revendications 1 à 12.

15. Procédé selon la revendication 14, **caractérisé en ce que** l'on utilise de petits pistolets de pulvérisation.

16. Ensemble de réparation ponctuel pour l'entraînement et la réalisation du procédé selon la revendication 14 ou 15, comprenant
- une valise de métal et/ou de matière plastique stable résistant aux rayures,
- un insert de mousse au fond de la valise avec une empreinte au centre et deux empreintes disposées symétriquement à gauche et à droite de celle-ci, dans lequel
- l'empreinte au centre contient un emballage avec la solution de liant prête à pulvériser selon l'une des quelconque revendications 1 à 12 et
- les deux empreintes à gauche et à droite de celle-ci contiennent respectivement un petit pistolet de pulvérisation pour la réalisation du procédé selon l'une quelconque des réalisations 13 à 15,
- un insert de mousse dans le couvercle de la valise, dans lequel
- sont disposés un manuel et un CD-ROM, qui décrivent le procédé selon l'une quelconque des revendications 13 à 15.
